# EUROPEAN PATENT SPECIFICATION

(11) **EP 1 483 141 B1**
(45) Date of publication and mention of the grant of the patent: **05.07.2006**
(21) Application number: 03708771.5
(22) Date of filing: 04.03.2003
(51) Int. Cl.: B60S 1/60, B60S 1/48, B60S 1/54

(54) **A SYSTEM FOR AUTOMATIC CLEANING OF AN EXTERIOR SURFACE OF A MOTOR VEHICLE**
SYSTEM ZUR AUTOMATISCHEN REINIGUNG EINER AUSSENFLÄCHE EINES KRAFTFAHRZEUGS
SYSTEME DE NETTOYAGE AUTOMATIQUE DE LA SURFACE EXTERIEURE D'UN VEHICULE AUTOMOBILE

(30) Priority: 08.03.2002 SE 0200697
(43) Date of publication of application: 08.12.2004
(73) Proprietor: Wästermark, Kurt-Göran, 931 54 Skelleftea (SE)
(72) Inventor: Wästermark, Kurt-Göran, 931 54 Skelleftea (SE)
(74) Representative: Nyberg, Bengt
(86) International application number: PCT/SE2003/000350
(87) International publication number: WO 2003/076242

(56) References cited:
- WO-A1-99/54177
- DE-A1- 4 142 581
- DE-A1- 4 435 941
- SE-C2- 507 055
- US-A- 5 546 630
- US-A- 5 965 950

## Description

### Field of the invention:

The invention relates to a system for automatic cleaning of exterior surfaces of light lenses and other exterior signalling or viewing surfaces of motor vehicles. More particularly, the invention relates to a system which comprises at least one cleaning nozzle having a fluid inlet connectable to a source of pressurised cleaning fluid and a fluid outlet for directing a pressurised cleaning fluid toward an exterior surface to be cleaned and an automatically operating cleaning control device for repetitive on-off control of supply of pressurised cleaning fluid to the cleaning nozzle.

Although not so limited in its application, the invention is believed to be of primary interest for cleaning of the lenses of lights of trucks or lorries, with or without trailers, buses and other large commercial or utility vehicles, especially the tail or rear lights - such as the braking and turn indicator lights - of such vehicles. Accordingly, the invention will be described with particular reference to its use in this field of application, but it is to be noted that the system of the invention is also applicable to cleaning of other exterior surfaces on vehicles, such as on a rear-view mirror or a transparent panel which must be kept clean so that it is possible see properly in the mirrors or see properly through such panels during travel of the vehicle.

### Background of the invention:

Cleaning systems of the kind indicated above are known in several embodiments. In a system of that kind which is known from US-A-3 915 385, a cleaning control device is provided which automatically initiates and terminates cleaning of headlight lenses with a certain periodicity such that pressurised cleaning fluid is repetitively supplied to the cleaning nozzle during preset cleaning periods and at suitable intervals. The cleaning system is manually switched by closing a switch in the driver's compartment.

A cleaning system known from US-A-5 546 630 is similar to the system just described but is arranged such that the cleaning control device cannot be activated unless the parking lights of the motor vehicle are switched on and the driver actuated switch is closed.

Accordingly, the above-described known cleaning systems are therefore enabled and periodically activated as long as the driver actuated switch is closed and besides, in the last-mentioned system, the parking lights are switched on. Cleaning therefore takes place even when the vehicle is at rest. If the vehicle is at rest with the engine stopped and the parking lights switched on, e.g. while the driver is taking a rest, cleaning fluid will be supplied to the cleaning nozzle at the preset intervals if, as can easily happen, the driver has forgotten to open the driver actuated switch. The cleaning fluid commonly is compressed air taken from a compressed-air reservoir system to which the brake system of the vehicle is connected. Because the engine is not running and the consumption of compressed air during the driver's rest is not compensated for, it may be impossible to drive the vehicle again until the engine has been running for some time to allow building up of the air pressure to a safe level.

In a cleaning system known from SE-C-507 055 the cleaning is controlled by the brakes of the vehicle. Whenever the brakes are used, the cleaning system is automatically activated. In this manner a repetitive, although not regular, cleaning is accomplished without any requirement on the part of the driver to take a particular action, such as closing a switch. When driving in conditions in which the lenses of the vehicle lights rapidly become dirty, the cleaning may not be effected frequently enough to keep the lenses clean. This may be the case when driving on good roads and repeatedly covering long distances without having to use the brakes. On the other hand, because compressed air is consumed every time the brakes are applied, it may happen that the air consumption becomes unduly high if the brakes have to be used very frequently, such as when driving long distances downhill or when driving in dense traffic.

### Brief summary of the invention:

The present invention provides a solution whereby the cleaning device is enabled without the driver having to take any particular action to ensure that cleaning is automatically effected at a preset suitable frequency, but only when the vehicle is travelling.

In accordance with the invention, the cleaning system comprises, in addition to at least one cleaning nozzle and a cleaning control device as mentioned initially, a vehicle movement sensor device connected to the cleaning control device and responsive to movement of the vehicle to enable the cleaning control device only in response to sensing travel of the motor vehicle, the vehicle movement sensor device including a vehicle vibration sensor and means for detecting vehicle vibrations indicative of travel of the motor vehicle. Thus, even though the cleaning system is switched on, the cleaning control device remains disabled to prevent supply of cleaning fluid to the cleaning nozzle unless the sensor device senses vehicle vibrations which resemble those which are typical for normal travel of the vehicle. Vibrations which are very weak or only of short duration, such as vibrations which may occur when the vehicle is being loaded or unloaded or when the vehicle is at rest with the engine idling, are not adequate to enable the cleaning control device. Suitable discrimination or filtration of such vibrations can readily be accomplished with electronic means.

The vibration sensor device can be of any suitable type. For example, its operation may be based on sensing of accelerations or inclinations of a movable sensor member or sensing of other movements imposed on the vehicle vibration sensor during travel of the vehicle.

Advantageously, the cleaning system according to the invention can be supplied with cleaning fluid in the form of compressed air taken from a compressed-air reservoir forming part of a compressed-air system of the vehicle. The cleaning system requires no modification or integrity violation of the braking system of the vehicle, only a simple connection of an air conduit to the compressed-air reservoir. Most modem vehicles equipped with air operated brakes have factory-installed compressed-air reservoirs with connectors for attachment of conduits associated with add-on or auxiliary equipment, and it therefore is very easy to connect a conduit for compressed air to be used as a cleaning fluid. Compressed air used as a cleaning fluid may also be supplemented with a liquid.

### Brief description of the drawings:

The invention will be described in greater detail below with reference to a preferred embodiment shown diagrammatically by way of example in the accompanying drawings in which:
Fig. 1 is an elevational view of a motor vehicle having a cleaning system for the rear lights of the vehicle;
Fig. 2 is a rear view of the motor vehicle and also shows components of the cleaning system;

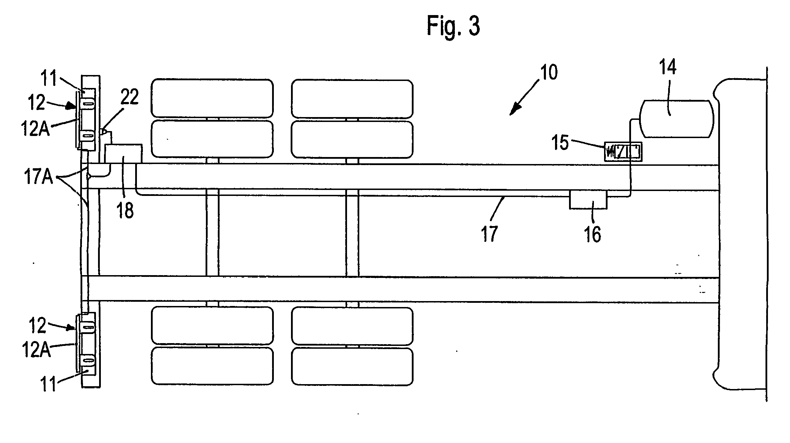

Fig. 3 is a plan view of the chassis of the motor vehicle with components of the cleaning system mounted thereon; and
Fig. 4 is a block diagram of a part of the cleaning system.

### Detailed description of a preferred embodiment:

The motor vehicle 10 illustrated in the drawings is a conventional truck or lorry having a pair of tail or rear lights 11. Both rear lights are provided with a cleaning device 12 supplied with a cleaning fluid when in operation. In the present example, the cleaning fluid is compressed air produced by a compressor 13 and delivered from a compressed-air source 14 in the form of a reservoir connected to the compressor and being part of the conventional compressed-air system of the vehicle. The brakes of the vehicle are also connected to the compressed-air system in a conventional manner.

Supply of the pressurised cleaning fluid to the cleaning devices 12 from the compressed-air source 14 takes place through a pressure monitor 15 and a user unit 16 positioned downstream of the pressure monitor. Both the pressure monitor and the user unit 16 are factory-installed components of most modem large utility vehicles. The pressure monitor 15 ensures that no air is supplied to the user unit 16 unless the pressure in the compressed-air source 14 exceeds a certain minimum value. The user unit 16 is provided with a number of air outlets (not shown) where the user of the vehicle 10 can connect air-consuming equipment.

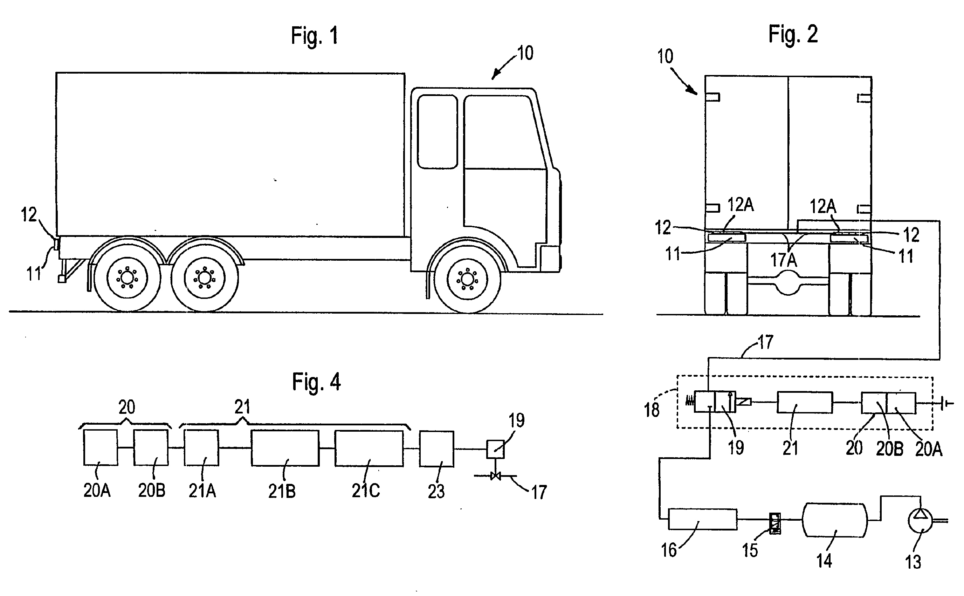

From the user unit 16 an air conduit 17, such as a hose, extends to an enclosure formed by a housing or box 18, which accommodates components of the cleaning system. Near the box 18 the air conduit 17 branches into two branch conduits 17A, each extending to an associated one of the cleaning devices 12. Housed in the box 18 are a normally closed two-way two-position solenoid valve 19 which is inserted in the air conduit 17, a vehicle movement sensor device 20 which comprises a vehicle vibration sensor 20A and an associated filter device 20B for detecting vibrations or a vibration pattern indicative of travel of the motor vehicle 10, and a cleaning control device 21, which is connected between the solenoid valve 19 and the vehicle movement sensor device 20. The just-mentioned components in the box 18 are shown in Figs. 2 and 4. They are supplied with electric current from the battery of the vehicle 10 through an electrical outlet 22 on the chassis of the vehicle and a cable extending from the battery to the box 18. Alternatively, the current supply can take place via one of the rear lights 11.

The vehicle movement sensor device 20, which includes the vibration sensor 20A and the associated filter device 20B, serves to sense the vibrations of the vehicle chassis and feed a signal to the cleaning control device 21 when the chassis vibrations are indicative of normal travel of the motor vehicle 10. In response to the signals from the vehicle movement sensor device 20 the cleaning control device 21 actuates the solenoid valve 19 to cause it repetitively to switch between open and closed positions and thereby control the supply of pressurised cleaning fluid to the cleaning devices 12 in on-off fashion.

More particularly, the cleaning control device 21 operates to feed opening pulses to the solenoid valve 19 at preset time intervals and for preset durations, but only as long as the vehicle movement sensor device 20 delivers signals to the cleaning control device 21 which are of a character such that they are representative of vibrations or vibration patterns which can be considered as being typical of the motor vehicle 10 during normal travel. If such signals are no longer fed to the cleaning control device 21, that device is disabled.

During the periods in which the solenoid valve 19 receives opening impulses and thus is kept open, the cleaning fluid can flow through the conduit 17 and its branches 17A to the cleaning devices 12. Each cleaning device 12 includes an elongate tubular cleaning nozzle 12A extending along the upper side of the lens of the associated rear light 11, suitably 5 to 10 mm above the lens. Each cleaning nozzle 12A has a fluid inlet at one end and a fluid outlet comprising a plurality of outlet openings distributed along the length of the nozzle and directed toward the lens of the rear light 11. Jets of compressed air from the outlet openings of the cleaning nozzle impinge on the rear side of the lens, suitably at an angle of 10° to 25° therewith. The duration of the cleaning periods and the time intervals separating them preferably are adjustable within wide limits and should be optimised to provide an efficient cleaning action and also a satisfactory cleaning fluid economy. In most cases cleaning periods of 2 to 10 seconds at intervals of 5 to 15 minutes are adequate for a satisfactory cleaning, but the cleaning periods may also be substantially shorter, such as about a half-second and the intervals between the cleaning periods may be as short as 1 minute or even less.

If the signals from the vehicle movement sensor device 20 disappear or otherwise take a character such that they no longer are indicative of normal travel of the motor vehicle 10, e.g. because their amplitude becomes too small or a signal of the selected minimum magnitude is not followed by a new such signal within a certain preset maximum time, the cleaning control device 21 is disabled so that the solenoid valve 19 remains closed. For example, if the motor vehicle 10 is at rest, the cleaning control device 21 will be disabled, because any occurring vibrations of the vehicle chassis and thus of the vehicle movement sensor device 20, such as vibrations caused by the engine when it is idling or caused by passing heavy vehicles or by other events that do not produce a vibration pattern and/or vibration amplitudes corresponding or similar to those which normally appear during travel of the vehicle V, are prevented from producing opening signals to the solenoid valve 19.

Fig. 4 is a block diagram of the main components accommodated in the box 18, that is, the solenoid valve 19, the vehicle movement sensor device 20 and the cleaning control device 21. In an actual embodiment of the invention, the vehicle movement sensor device 20 and the cleaning control device 21 are mounted on a circuit board installed in the box 18.

The vibration sensor 20A may be of any suitable kind. Several suitable vibration sensors are available on the market. An example is a vibration sensor device of the kind which comprises a tube having an electrically conducting coating on its interior surface, a conducting pin protruding into one end of the tube, and a conducting ball placed in the tube such that it will engage the conducting interior coating and the end of the pin when the device is at rest. The pin and the conducting coating form contacts in an electric circuit which is closed when the ball engages both the pin and the coating but is opened when the ball moves as a result of vibrations of the tube and is disengaged from the pin or the coating.

In the embodiment of the invention which is illustrated and described, a vibration sensor of the kind marketed by Assemtech Europe Limited under the designation CW 1300-1 can be advantageously used.

The electric signals produced by the vibration sensor 20A are fed to the filter device 20B. The filter device 20B blocks signals that do not reach a certain preset magnitude. Signals passing through the filter device 20B are received by a timer circuit 21A of the cleaning control device 21. Upon each reception of such a signal, the timer circuit 21A initiates a check time interval of, say, three minutes. As long as the time interval has not expired, the timer circuit 21A maintains two further timer circuits 21B and 21C in an activated condition.

One of these further timer circuits, the one designated 21B, initiates a selected off interval of between 5 and 15 minutes, for example. At the end of the selected off interval, the timer circuit 21C initiates an on period of adjustable duration, such as between 2 and 10 minutes, in which the solenoid valve 19 is energized by a switch 23 (such as a transistor) and thus is kept open to pass cleaning fluid from the compressed-air source 14 to the cleaning devices 12.

Then the timer circuit 21B initiates a new off interval, which is followed by a new on or cleaning period. This operation is repeated as long as the timer circuit 21A receives signals from the filter device 20B without interruptions lasting longer than the check time interval, that is, three minutes in the example given above.

In the embodiment described above, only air is used as a cleaning fluid; this is often sufficient to produce the desired cleaning. However, if desired or required, the air may be supplemented by a cleaning liquid, e.g. from a separate container from which the air draws the liquid into the conduit 17 by ejector action, either all the time or only in response to a separate signal given by the driver.

Naturally, the cleaning system can also be used on trailers or semitrailers. Such vehicles suitably are provided with a separate box corresponding to the box 18 and a compressed-air reservoir fed with compressed air from the compressor of the tractor vehicle. The cleaning system on the trailer or semitrailer can then be used even if the tractor vehicle is not provided with a cleaning device according to the invention. If the trailer or semitrailer is provided with means for supplementing the cleaning air with a cleaning liquid, it may advantageously be provided with a radio controlled activating device for the cleaning liquid supply so that the cleaning liquid can be used even if the tractor vehicle is not equipped with the cleaning system of the invention.

## Claims

1. A system for automatic cleaning of exterior surfaces of light lenses (11) and other exterior signalling or viewing surfaces of motor vehicles, comprising
at least one cleaning nozzle (12A) having a fluid inlet connectable to a source of pressurised cleaning fluid (13, 14, 15) and a fluid outlet for directing a pressurised cleaning fluid toward an exterior surface to be cleaned,
an automatically operating cleaning control device (21) for repetitive on-off control of supply of pressurised cleaning fluid to the cleaning nozzle, **characterised in that** it further comprises a vehicle movement sensor device (20) connected to the cleaning control device (21) and responsive to movement of the vehicle to enable the cleaning control device (21) only in response to the vehicle movement sensor device (20) sensing travel of the motor vehicle, the vehicle movement sensor device (20) including a vehicle vibration sensor (20A) and means for detecting vehicle vibrations indicative of travel of the motor vehicle.

2. A system as claimed in claim 1, **characterised in that** the cleaning control device (21) and the vehicle vibration sensor (20) are mounted on a chassis of the motor vehicle (10).

3. A system as claimed in any of claims 1 or 2, **characterised in that** the source of pressurised cleaning fluid includes a compressed-air reservoir (15).

## Patentansprüche

1. System zum automatischen Reinigen von äußeren Oberflächen von Scheinwerferlinsen (11) und von anderen Signalgebungs- oder Betrachtungsoberflächen von Kraftfahrzeugen, das umfasst:
wenigstens eine Reinigungsdüse (12A) mit einem Fluideinlass, der mit einer Quelle für mit Druck beaufschlagtes Reinigungsfluid (13, 14, 15) verbindbar ist, und mit einem Fluidauslass, der mit Druck beaufschlagtes Reinigungsfluid zu einer zu reinigenden äußeren Oberfläche richtet,
eine automatisch arbeitende Reinigungssteuervorrichtung (21) für die wiederholte Ein/Aus-Steuerung der Zufuhr von mit Druck beaufschlagtem Reinigungsfluid zu der Reinigungsdüse, **dadurch gekennzeichnet, dass** es ferner eine Fahrzeugbewegungs-Sensorvorrichtung (20) umfasst, die mit der Reinigungssteuervorrichtung (21) verbunden ist und auf eine Bewegung des Fahrzeugs anspricht, um nur in Reaktion auf die Tatsache, dass die Fahrzeugbewegungs-Sensorvorrichtung (20) eine Bewegung des Kraftfahrzeugs erfasst, die Reinigungssteuervorrichtung (21) freizugeben, wobei die Fahrzeugbewegungs-Sensorvorrichtung (20) einen Fahrzeugvibrationssensor (20A) und Mittel für die Erfassung von Fahrzeugvibrationen, die eine Bewegung des Kraftfahrzeugs angeben, umfasst.

2. System nach Anspruch 1, **dadurch gekennzeichnet, dass** die Reinigungssteuervorrichtung (21) und der Fahrzeugvibrationssensor (20) an einem Rahmen des Kraftfahrzeugs (10) angebracht sind.

3. System nach einem der Ansprüche 1 oder 2, **dadurch gekennzeichnet, dass** die Quelle für mit Druck beaufschlagtes Fluid einen Druckluftbehälter (15) umfasst.

## Revendications

1. Système de nettoyage automatique de surfaces exterieures de lentilles (11) de phares et d'autres surfaces exterieures de signalisation ou de vue de véhicules à moteur, comprenant
au moins un jet de nettoyage (12A) ayant une entrée de fluide connectable à une source de fluide (13,14,15) nettoyant pressurisé, et une sortie pour diriger un fluide nettoyant pressurisé vers une surface à nettoyer,
un dispositif (21) d'opération automatique de control de nettoyage de réglage par tout ou rien de façon répètetive de fourniture de fluide nettoyant pressurisé au jet de nettoyage, **charactérisé** en ce qu'il en outre comprend un dispositif détecteur (20) relié au dispositif (21) de control de nettoyage et receptif des mouvements du véhicule à façon d'activer le dispositif (21) de control de nettoyage seulement quand le dispositif détecteur (20) de mouvements du véhicule détecte un déplacement du véhicule à moteur, le dispositif détecteur (20) de mouvements du véhicule comprenant un détecteur (20A) de vibrations du véhicule et moyens pour détecter les vibrations de véhicule indicatives du déplacement du véhicule à moteur.

2. Système selon la revendication 1, charactérisé en ce que le dispositif (21) de control de nettoyage et le dispositif détecteur (20) de mouvements du véhicule sont disposés sur un chassis du véhicule (10) à moteur.

3. Système selon quelquonque des revendications 1 ou 2, **charactérisé** en ce que la source de fluide nettoyant pressurisé comprend un réservoir (15) d'air pressurisé.
